# EUROPEAN PATENT SPECIFICATION

(11) **EP 3 714 147 B1**
(45) Date of publication and mention of the grant of the patent: **28.08.2024**
(21) Application number: 18840082.4
(22) Date of filing: 19.11.2018
(51) Int. Cl.: F02C 3/34, F01D 15/10, F01D 17/12, F02C 1/06, F02C 9/50, F02C 9/16

(54) **MICRO GAS TURBINE DESIGNED TO LIMIT HEAT LOSSES THEREFROM**
MIKROGASTURBINE, DIE DAZU AUSGELEGT IST, WÄRMEVERLUSTE DARAUS ZU BEGRENZEN
MICRO-TURBINE À GAZ CONÇUE POUR LIMITER LES PERTES THERMIQUES À PARTIR DE CELLE-CI

(30) Priority: 20.11.2017 NL 2019940
(43) Date of publication of application: 30.09.2020
(73) Proprietor: Micro Turbine Technology B.V., 5633 AE Eindhoven (NL)
(72) Inventor: KORNILOV, Viktor, 5665 JP Geldrop (NL); SMEETS, Paulus Maria, 5046 JC Tilburg (NL); OOSTVEEN, Mark, 5464 NN Veghel (NL); DE LATER, Marco, 6075 DC Herkenbosch (NL); DOUTCHEV, Ilian, 2517 CV Den Haag (NL)
(74) Representative: Dekker-Garms, Alwine Emilie
(86) International application number: PCT/NL2018/050771
(87) International publication number: WO 2019/098836

(56) References cited:
- EP-A1- 2 876 280
- EP-A2- 2 031 235
- DE-A1- 102014 206 474
- US-A1- 2014 000 270

## Description

The invention relates to a micro gas turbine as defined in claim 1 and comprising, inter alia, a compressor designed to take in and pressurize gas, a combustor designed to take in pressurized gas from the compressor and to generate hot gas on the basis of fuel combustion, a turbine designed to take in and expand hot gas generated by the combustor, a generator mechanically coupled to the turbine and designed to generate electric power on the basis of mechanical power, and a controller designed to control operation of the micro gas turbine.

The invention is in the field of gas turbines, particularly micro gas turbines. A possible application of micro gas turbines is an application for Combined Heat & Power (CHP), which does not alter the fact that other applications are feasible as well. Micro gas turbines and/or micro gas turbine based CHP systems may be used instead of conventional boilers in large houses, offices, plants, schools, stores etc., to mention one example, or may be used in hybrid electric vehicles so as to extend the range of such vehicles, to mention another example. In general, micro gas turbines are known for high reliability, low maintenance demand and low noise level, combined with high electric efficiency, low weight and low emissions.

A micro gas turbine typically comprises a compressor, a combustor and a turbine. During operation of a micro gas turbine, ambient air is drawn in and pressurized by the compressor. The compressed air is supplied to a combustor generating hot gas on the basis of fuel combustion. It is common practice to have a special type of heat exchanger called recuperator in a micro gas turbine, which in that case serves for pre-heating the air before being supplied to the combustor. From the combustor, the hot pressurized gas is supplied to the turbine where it expands and thereby provides mechanical power for both the compressor and a generator which is mechanically coupled to the turbine.

The mechanical power of the generator is used to generate electric power as a first type of output from the micro gas turbine. For the purpose of conveying the electric power to an electric power grid, the micro gas turbine is equipped with a suitable grid converter.

The expanded gas, i.e. the exhaust gas from the turbine, may be made to flow through a recuperator, as mentioned, in which case heat from the exhaust gas is used for pre-heating air compressed by the compressor, prior to supplying the air to the combustor. Further, it is possible for a micro gas turbine to comprise a gas-to-liquid heat exchanger, which in that case may be used for heating water, for example, so that hot water is obtained as a second type of output from the micro gas turbine. As an alternative, ambient air from an air heating system can be heated by using an air handler, in case forced air heating is used in a building, as is often the case in North America.

In view of practical applications of a micro gas turbine as a micro CHP system, the total efficiency of the micro gas turbine, i.e. the combination of electric efficiency and thermal efficiency, is an important characteristic of the micro gas turbine that is preferably kept as high as possible under all circumstances. In the designing process of a micro gas turbine, a certain operative output value of the electric power is taken into account. In practical situations, such operative output value may be chosen by taking into account a maximum allowable electric current value at the grid inverter, for example, or to another operative limit of one or more components of the micro gas turbine. In any case, the design of the micro gas turbine is optimized in view of the operative output value. This means that in order to realize the highest overall efficiency during actual operation of the micro gas turbine, it is advantageous to ensure that the micro gas turbine is in a mode in which the operative output value of the electric power is actually realized.

If relatively cold ambient air is taken in by the compressor, it happens that the electric power and/or the electric efficiency of the micro gas turbine increase, while the thermal power and/or the thermal efficiency of the micro gas turbine decrease. The first effect can be understood on the basis of the general fact that compressing cold air requires less energy than compressing air of a higher temperature. Also, the operative output value of the electric power is realized at a lower rotational speed of an assembly of the compressor, the turbine and the generator, which will hereinafter be referred to as rotating assembly, as a result of which the volume of air used in the micro gas turbine is reduced and less energy is needed for heating. The second effect can be understood on the basis of the fact that a difference between the temperatures of inlet gas and outlet gas of the micro gas turbine is larger, so that the amount of thermal energy that is lost through an exhaust of the micro gas turbine is increased.

Document EP2876280 A1 discloses a micro gas turbine according to the preamble of claim 1.

It is an object of the invention to provide a way of compensating for the reducing effect on the thermal efficiency and/or the thermal power following from an intake of relatively cold ambient air. This object is achieved by means of a micro gas turbine as defined in claim 1.

According to the invention, hot gas as obtained during operation of the micro gas turbine is used for the purpose of improving thermal efficiency and/or thermal power output of the micro gas turbine. The fact is that hot gas is available during operation of the micro gas turbine, and at least a part of the total quantity of hot gas can be used for the purpose of causing a temperature of inlet gas of the compressor to rise. Also, it is checked whether an actual value related to output electric power of the micro gas turbine, such as an actual value of the output electric current or an actual value of the electric efficiency, is below a predetermined operative value. If this appears to be the case, an increase of a rotational speed of the turbine and the generator is realized. By increasing the temperature of the gas that is taken in by the compressor, it is achieved that the electric power level and/or the electric efficiency decrease, which allows for an increase of the rotational speed of the rotating assembly until the point that the predetermined operative value related to output electric power is achieved. As long as the rotational speed of the rotating assembly is not at a predetermined maximum (which is not a mechanical maximum but a maximum in view of optimal total efficiency), the process of realizing a supply of hot gas to the compressor is carried out, wherein steps are taken in which the quantity of the hot gas that is used in the process is increased to a certain extent. Thus, as a result of every new step of the process, it is achieved that the temperature of inlet gas of the compressor is increased, wherein the predetermined operative value related to output electric power is realized at a higher rotational speed of the rotating assembly and thermal efficiency is improved as the amount of thermal energy that is output to the environment is reduced.

The controller is further configured to repeatedly perform a subsequent process once the rotational speed of the turbine and the generator has reached the predetermined maximum value, particularly a process comprising steps of checking an actual value related to output electric power of the micro gas turbine, and, when it is found that the actual value related to the output electric power is lower than the predetermined operative value, decreasing the extent to which hot gas is allowed to flow to the compressor until the predetermined operative value related to output electric power is achieved. Thus, in the situation that operation of the micro gas turbine involves rotation of the rotating assembly at the maximum speed, maintaining the predetermined operative value related to output electric power of the micro gas turbine is done by decreasing the supply of hot gas to the compressor. As power control can no longer be realized by changing the rotational speed of the rotating assembly, the supply of hot gas to the compressor is varied for that purpose. The desired outcome of the controlling process remains the same, namely operating the micro gas turbine so that the rotational speed of the rotating assembly and the output electric power are at, or as near as possible to, values to which the design of the micro gas turbine is optimized as explained earlier. As is the case with the situation in which the rotational speed of the rotating assembly is not yet at the predetermined maximum value, the check of the actual value related to the output electric power against the predetermined operative value can be performed in successive rounds so that a stepwise decrease of the supply of hot gas to the compressor can be realized in the process of approximating the predetermined operative value related to the output electric power and thermal losses can be kept to a minimum level under the circumstances.

It is practical if the controller is configured to perform the repeated step of checking an actual value related to output electric power at a predetermined time interval. Also, it is practical if the micro gas turbine comprises a valve mechanism which is associated with an inlet path to the compressor, the valve mechanism being controllable by the controller to open the inlet path of the compressor to hot gas as obtained during operation of the micro gas turbine.

As mentioned in the foregoing, hot gas is available during operation of the micro gas turbine. According to a first feasible option, hot gas can be retrieved from a cabinet of the micro gas turbine in which the compressor, the combustor, the turbine and more components of the micro gas turbine are accommodated, assuming that the micro gas turbine further comprises a purging mechanism designed to realize purging of the cabinet's interior by supplying air to the cabinet's interior. In that case, it is practical for the valve mechanism to be controllable by the controller to open the inlet path of the compressor to the cabinet's interior for enabling the compressor to take in air supplied by the purging mechanism to the cabinet's interior. The fact is that the cabinet's interior is hot during operation of the micro gas turbine due to operation of the combustor and other components of the micro gas turbine. According to the invention, hot gas can be retrieved at a position that is at an outlet side of the turbine, in which case the valve mechanism may be designed so as to be controllable by the controller to open the inlet path of the compressor to an exhaust associated with the turbine for enabling the compressor to take in exhaust gas from the turbine. In the practical case that one or more heat exchangers such as a recuperator and a gas-to-liquid heat exchanger are arranged at the outlet side of the turbine, such an exhaust is positioned downstream of the one or more heat exchangers.

In respect of this feasible option, it is noted that the air excess ratio of a micro gas turbine having a recuperator is significantly larger than the air excess ratio of conventional internal combustion engines. A typical value of the air to fuel mass ratio of a micro gas turbine, i.e. the mass ratio of air to fuel present in the combustion process taking place in the micro gas turbine during operation thereof, is 90:1. On the one hand, a high mass flow rate of air involves higher heat losses compared to a system working at near stoichiometric combustion conditions. On the other hand, the high mass flow rate of air allows for using the exhaust gas from the turbine as inlet gas of the compressor, as the exhaust gas from the turbine still contains a rather high amount of oxygen.

Within the framework of the invention, the micro gas turbine may be designed so as to allow for use of hot gas originating from either one or both of the cabinet and the outlet side of the turbine. In the latter case, it is practical for the valve mechanism to comprise a valve and a connection piece having three connection areas, the compressor being connected to one of the connection areas of the connection piece through the valve, the exhaust being connected to another of the connection areas of the connection piece, and the cabinet being connected to yet another of the connection areas of the connection piece. For example, the connection piece may be Y shaped and comprise two bifurcation legs and one main leg, the compressor being connected to one of the bifurcation legs of the connection piece through the valve, the exhaust associated with the turbine being connected to the other of the bifurcation legs of the connection piece, and the cabinet being connected to the main leg of the connection piece. In such a case, there is no need for applying complex valve constructions and associated complex control features. Due to operation of the compressor, it is automatically achieved that a slight underpressure prevails at the one of the bifurcation legs of the connection piece. Further, assuming that the purging mechanism comprises a ventilating mechanism designed to generate a flow of air in the cabinet, it is automatically achieved that a higher pressure prevails at the other of the bifurcation legs of the connection piece. As a result, when the valve is opened, a flow of hot air from the cabinet to the compressor is enabled. By opening the valve further and further, it is eventually achieved that a flow of hot gas originating from the turbine is sucked in as well. In this configuration, if the valve is closed, the normal situation of the air from the cabinet being discharged along with the exhaust gas from the turbine is realized.

An Y shaped connection piece is just one example of a component that may be applied in a practical embodiment of the valve mechanism. Alternatively, a T shaped connection piece or another connection piece having three legs/branches may be used, for example.

As mentioned earlier, in practical cases, the micro gas turbine further comprises a grid converter designed to output electric power generated by the micro gas turbine during operation thereof to an electric power grid. According to one possibility, the predetermined operative value related to the output electric power of the micro gas turbine may be chosen in relation to a maximum allowable current level at the grid converter, i.e. may be linked to the maximum allowable current level at the grid converter.

It follows from the foregoing that the invention provides an algorithm for controlling the micro gas turbine so as to achieve that thermal efficiency of the micro gas turbine during operation thereof is kept optimal under various circumstances. In particular, the invention provides measures for improving thermal efficiency in case the ambient air that is to be supplied to the compressor is relatively cold. A practical example of a value of the temperature that is taken as an assumption during the designing process of the micro gas turbine is 15°C. Practical examples of maximum/optimal values of the rotational speed of the rotating assembly and an output electric current of the grid converter are 240,000 rpm and 14 A, respectively, wherein it is noted that these values may be associated with a micro gas turbine for generating about 3 kW electrical power.

The micro gas turbine according to the invention may be of any practical type. In that respect, it is noted that the micro gas turbine may comprise a heat exchanger being configured and arranged to serve as a recuperator for pre-heating pressurized gas obtained from the compressor before being supplied to the combustor by allowing the pressurized gas to exchange heat with exhaust gas from the turbine, as is common in the field of micro gas turbines. Likewise, the micro gas turbine may comprise a heat exchanger being configured and arranged to serve for heating an external medium by allowing the external medium to exchange heat with exhaust gas from the turbine.

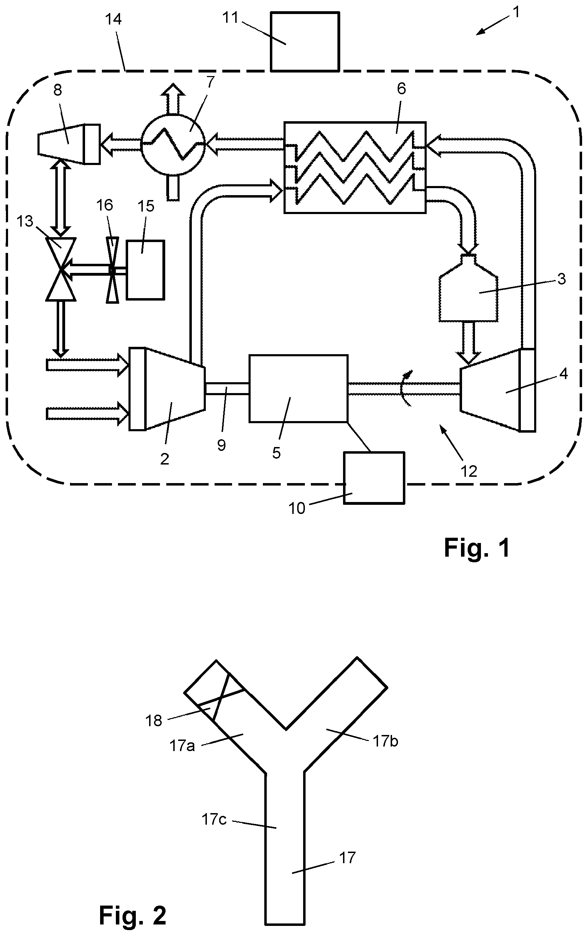

The invention will be further elucidated on the basis of the following description of an example of a micro gas turbine which is designed to be operated at optimal thermal efficiency, even when the air that is to be taken in by the compressor of the micro gas turbine is relatively cold, i.e. at a temperature which is lower than a reference design temperature. Reference will be made to the drawing, in which: figure 1 shows a scheme of various components of a micro gas turbine according to the invention; and figure 2 diagrammatically shows a Y shaped connection piece and a valve as may be part of a valve mechanism of the micro gas turbine.

The figures relate to a micro gas turbine 1 having features according to the invention, as will now be explained. The micro gas turbine 1 as shown and described represents only one example of many possibilities existing within the framework of the invention.

Figure 1 shows a scheme of various components of the micro gas turbine 1, wherein fluid flows are indicated by means of large arrows. The micro gas turbine 1 may be dimensioned to generate up to 30 kW electrical power, for example, although lower electric power values are possible as well. The micro gas turbine 1 comprises a compressor 2, a combustor 3, a turbine 4, a high speed generator 5, a recuperator 6, a heat exchanger 7 and an exhaust 8. The high speed generator 5 is arranged on a common shaft 9 of the compressor 2 and the turbine 4. When the micro gas turbine 1 is operated, air is input to the compressor 2 and fuel is input to the combustor 3. The compressor 2 acts to compress the air and to thereby pressurize the air, wherein the pressure of the air may be increased to about 3 bar, for example. The compressed air is supplied to the recuperator 6 where it is preheated under the influence of heat exchange with exhaust gas from the turbine 4. The compressed air is further heated under the influence of heat generated by fuel combustion in the combustor 3. The hot pressurized gas is expanded in the turbine 4, on the basis of which mechanical power is obtained that is used for powering both the compressor 2 and the high speed generator 5. In the process, the common shaft 9 performs a rotational movement as indicated by means of a small bent arrow in figure 1.

Exhaust gas from the turbine 4 is supplied to the recuperator 6 for heating compressed air from the compressor 2, as mentioned. After having passed the recuperator 6, the gas from the turbine 4 is made to flow through the heat exchanger 7 and finally through the exhaust 8. The heat exchanger 7 serves to heat a suitable medium such as water. Thus, output of the micro gas turbine 1 is realized at the heat exchanger 7, and also at the high speed generator 5. In respect of the latter, it is noted that the high speed generator 5 is designed to be used to generate electric current on the basis of mechanical power, and that the micro gas turbine 1 further comprises a grid converter 10 for outputting the electric current to an electric power grid (not shown).

For the purpose of controlling operation of the micro gas turbine 1, a controller 11 is provided. The controller 11 is configured to take care that all functionalities of the micro gas turbine 1 are performed in an appropriate manner so as to realize operation of the micro gas turbine 1 as envisaged. The controller 11 sets a rotational speed of the rotating assembly 12 of the compressor 2, the turbine 4, the high speed generator 5 and the common shaft 9, and controls a supply of fuel to the combustor 3, to mention only two examples.

It is advantageous if the micro gas turbine 1 can be operated under conditions as taken into account during the designing process of the micro gas turbine 1, assuming that the design of the micro gas turbine 1 is optimized to those conditions, so that the total efficiency of the micro gas turbine 1 is optimal at those conditions. However, the practical fact is that out of those conditions, the temperature of the ambient air to be taken in by the compressor 2 is a variable factor. Deviation of the actual temperature of the ambient air from a reference design temperature, which may be 15°C, for example, involves a reduction of thermal efficiency of the micro gas turbine 1. In order to compensate for this phenomenon, at least as much as possible in case the actual temperature of the ambient air is lower than the reference design temperature, the micro gas turbine 1 is equipped with a valve mechanism 13.

In the shown example, the valve mechanism 13 is associated with an inlet side of the compressor 2, with the exhaust 8, and with a cabinet 14 in which various components of the micro gas turbine 1, including the compressor 2, the combustor 3 and the turbine 4, are accommodated. The valve mechanism 13 comprises at least one valve at a position between the inlet side of the compressor 2 on the one hand and the exhaust 8 and the cabinet 14 on the other hand. Also, the micro gas turbine 1 comprises a purging mechanism 15 including a fan 16 for supplying purging air to the cabinet 14 and generating a flow of the purging air inside the cabinet 14. This is done to minimize a risk of accumulation of inflammable/explosive gases in the cabinet 14 which may take place in case unexpected leaks occur, for example.

When operation of the micro gas turbine 1 is initiated, the controller 11 functions to bring about an increase of the rotational speed of the rotating assembly 12. In the process, at a certain point, the maximum allowable current is reached at the grid inverter 10, at which point the increase of the rotational speed is stopped. Starting from a fully closed position of the valve mechanism 13, the at least one valve of the valve mechanism 13 is opened in a stepwise fashion, while the output current of the grid inverter 10 is checked. Every time the amount of hot gas supplied to the inlet side of the compressor 2 is increased, the mechanical power level at which the micro gas turbine 1 is operated gets reduced, as a result of which the output current is reduced as well. As soon as the output current reaches a certain minimum allowable value, a process in which the rotational speed of the rotating assembly 12 is increased takes place, after which the supply of hot gas to the inlet side of the compressor 2 is increased and the process which leads to increase of rotational speed of the rotating assembly 12 is started all over again. Hence, by gradually increasing the supply of hot gas to the inlet side of the compressor 2, it is achieved that the rotational speed can be made to approximate the design rotational speed. For the purpose of checking the level of the output current at the grid converter 10, any suitable means may be applied.

The process of gradually opening the at least one valve of the valve mechanism 13 is terminated when the rotational speed of the rotating assembly 12 is at the maximum level. From that moment on, if it is found that the level of the output current of the grid inverter 10 is lower than the highest level and even as low as the minimum level, the valve mechanism 13 is put to a further closed position, while the rotational speed of the rotating assembly 12 is kept at the maximum level. Under those circumstances, it is achieved that due to a decrease of temperature of an intake flow of the compressor 2, the mechanical power level goes up and the level of the output current of the grid inverter 10 is increased.

If the micro gas turbine 1 would not comprise the valve mechanism 13 at a position between the inlet side of the compressor 2, the exhaust 8 and the cabinet 14, and if the controller 11 would not be configured so as to control the valve mechanism 13 in the way as described in the foregoing, thermal efficiency of the micro gas turbine 1 would be at a poor level when the temperature of the ambient air taken in by the compressor 2 would be relatively low, i.e. lower than the reference temperature as taken into account in the design process of the micro gas turbine 1. In order to ensure proper operation of the micro gas turbine 1, a mass flow which is large compared to mass flows used in conventional techniques such as internal combustion is needed, which causes the effect of a low ambient temperature to be significant as a large amount of thermal energy exits the micro gas turbine 1 through the exhaust 8.

By having the valve mechanism 13 and controlling the valve mechanism 13 in a specific manner, it is achieved that the actual operational conditions of the micro gas turbine 1 can be made to approximate the reference design conditions, wherein the thermal efficiency of the micro gas turbine 1 can be kept as high as possible. In particular, controlling the valve mechanism 13 aims at having a rotational speed of the rotating assembly 12 at a predetermined maximum level and at the same time having the output electric current of the grid converter 10 at a predetermined operative level. In the process, hot gas as available in the micro gas turbine 1 is used, wherein there is no need for an additional energy flow for achieving a controlling functionality as desired. The hot gas can be taken from the cabinet 14 in view of the fact that the purging mechanism 15 acts to supply air to the cabinet 14 and the fact that the temperature prevailing in the cabinet 14 is high during operation. Alternatively or in addition, the hot gas can be taken from the exhaust 8, in which case the hot gas is exhaust gas from the turbine 4 which is retrieved before exiting the micro gas turbine 1.

In figure 2, a possible embodiment of the valve mechanism 13 is illustrated. In particular, a Y shaped connection piece 17 and a valve 18 as may be part of the valve mechanism 13 are shown. The valve 18 is arranged at one of the bifurcation legs 17a, 17b of the connection piece 17, i.e. a bifurcation leg 17a which is shown at the left side in the representation as shown in figure 2, and which will hereinafter be referred to as compressor leg 17a. The other of the bifurcation legs 17a, 17b of the connection piece 17, i.e. a bifurcation leg 17b which is shown at the right side in the representation as shown in figure 2, serves for connection of the valve mechanism 13 to the exhaust 8, and will hereinafter be referred to as exhaust leg 17b. The main leg 17c of the connection piece 17 serves for connecting the valve mechanism 13 to the cabinet 14, and will hereinafter be referred to as cabinet leg 17c.

On the basis of the flow which is created by the compressor 2 during operation of the micro gas turbine 1, a slight underpressure is prevailing at an inlet side of the valve 18, i.e. in the compressor leg 17a. Under the influence of operation of the fan 16 of the purging mechanism 15, the pressure prevailing in the cabinet leg 17c is at a higher level, so that an air flow from the cabinet 14 to the compressor 2 is obtained when the valve 18 is opened. When the valve 18 is fully opened, a flow of gas from the exhaust 8 is realized as well, wherein the gas is drawn in through the exhaust leg 17b. If the valve 18 is fully closed or almost fully closed, an air flow from the cabinet 14 to the exhaust 8 will be obtained.

It is noted that the extent to which a temperature of an inlet flow of the compressor 2 is varied is dependent on a number of factors, including the functional position of the valve mechanism 13, a rotational speed of the fan 16 of the purging mechanism 15 (which may be dependent on the temperature prevailing in the cabinet 14), the rotational speed of the rotating assembly 12, and the temperature of the medium that is heated in the heat exchanger 7 as this temperature determines the temperature of the hot gas at the exhaust 8 and also, to some extent, the temperature prevailing in the cabinet 14.

It follows from the foregoing that in the micro gas turbine 1 according to the invention, advantageous use can be made of the presence of a purging mechanism 15 comprising a fan 16. The relatively hot air from the cabinet 14 can be used in a process of keeping the thermal efficiency at an optimal level during operation of the micro gas turbine 1. Also, the exhaust gas from the turbine 4 can be used in the process as mentioned, wherein advantageous use is made of the fact that the level of oxygen of the exhaust gas is still rather high even though the gas is output from an assembly including a combustor 3.

It will be clear to a person skilled in the art that the scope of the invention is not limited to the examples discussed in the foregoing, but that several amendments and modifications thereof are possible without deviating from the scope of the invention as defined in the attached claims.

For the sake of completeness, it is noted that where aspects of the invention like "the rotational speed of the rotating assembly 12 is at the maximum level" are mentioned, these are to be understood for their practical meaning, taking into account that in fact a tolerance window is applicable.

A possible summary of the invention reads follows. When the temperature of ambient air is relatively low, thermal output and thermal efficiency of a micro gas turbine 1 decrease. In order to compensate for the loss of thermal efficiency, the micro gas turbine 1 is equipped with a valve mechanism 13 by means of which the operation of the micro gas turbine 1 can be influenced and optimized, particularly by regulating a supply of hot gas as obtained during operation of the micro gas turbine 1, which may be hot gas from the cabinet 14 and/or the exhaust 8 of the micro gas turbine 1, for example, to an inlet side of the compressor 2.

The concept of having a possibility of supplying hot gas from the cabinet 14 to the inlet side of the compressor 2 is not necessarily linked to a particular way of controlling operation of the micro gas turbine 1. In view thereof, the invention also relates to a micro gas turbine 1 comprising a compressor 2 designed to take in and pressurize gas, a combustor 3 designed to take in pressurized gas from the compressor 2 and to generate hot gas on the basis of fuel combustion, a turbine 4 designed to take in and expand hot gas generated by the combustor 3, a generator 5 mechanically coupled to the turbine 4 and designed to generate electric power on the basis of mechanical power, a controller 11 designed to control operation of the micro gas turbine 1, a valve mechanism 13 which is associated with an inlet path to the compressor 2, the valve mechanism 13 being controllable by the controller 11 to open the inlet path of the compressor 2 to hot gas as obtained during operation of the micro gas turbine 1, a cabinet 14 accommodating at least the compressor 2, the combustor 3 and the turbine 4, and a purging mechanism 15 designed to realize purging of the cabinet's interior by supplying air to the cabinet's interior, wherein the valve mechanism 13 is controllable by the controller 11 to open the inlet path of the compressor 2 to the cabinet's interior for enabling the compressor 2 to take in air supplied by the purging mechanism 15 to the cabinet's interior.

Using air from the cabinet's interior as a default option and only additionally using exhaust air originating from the turbine 4 when such is necessary to achieve a certain supply of hot gas to the inlet side of the compressor 2 is advantageous over only using exhaust air originating from the turbine 4. In this way, heat losses through discharge of air from the cabinet's interior are kept limited. Also, air from the cabinet's interior has a higher content of oxygen and a lower content of combustion products than exhaust air originating from the turbine 4, so that it is better suited to be used in the fuel combustion process in the combustor 3.

Further, the invention relates to a possibility of supplying hot gas from the cabinet 14 to the inlet side of the compressor 2 without necessarily using a valve mechanism 13. In view thereof, the invention also relates to a micro gas turbine 1 comprising a compressor 2 designed to take in and pressurize gas, a combustor 3 designed to take in pressurized gas from the compressor 2 and to generate hot gas on the basis of fuel combustion, a turbine 4 designed to take in and expand hot gas generated by the combustor 3, a generator 5 mechanically coupled to the turbine 4 and designed to generate electric power on the basis of mechanical power, a cabinet 14 accommodating at least the compressor 2, the combustor 3 and the turbine 4, and a purging mechanism 15 designed to realize purging of the cabinet's interior by supplying air to the cabinet's interior, wherein an inlet path of the compressor 2 is open to the cabinet's interior for enabling the compressor 2 to take in air supplied by the purging mechanism 15 to the cabinet's interior.

## Claims

1. Micro gas turbine (1) comprising
- a compressor (2) designed to take in and pressurize gas,
- a combustor (3) designed to take in pressurized gas from the compressor (2) and to generate hot gas on the basis of fuel combustion,
- a turbine (4) designed to take in and expand hot gas generated by the combustor (3),
- a generator (5) mechanically coupled to the turbine (4) and designed to generate electric power on the basis of mechanical power,
- a controller (11) designed to control operation of the micro gas turbine (1),
- a valve mechanism (13) which is associated with an inlet path to the compressor (2), the micro gas turbine (1) being **characterized by** further comprising :
- a cabinet (14) accommodating at least the compressor (2), the combustor (3) and the turbine (4), and
- a purging mechanism (15) designed to realize purging of the cabinet's interior by supplying air to the cabinet's interior, wherein the valve mechanism (13) is controllable by the controller (11) to open the inlet path of the compressor (2) to the cabinet's interior for enabling the compressor (2) to take in air from the cabinet's interior, and wherein the valve mechanism (13) is also controllable by the controller (11) to open the inlet path of the compressor (2) to an exhaust (8) associated with the turbine (4) for enabling the compressor (2) to take in exhaust gas from the turbine (4).

2. Micro gas turbine (1) according to claim 1, wherein the valve mechanism (13) comprises a valve (18) and a connection piece (17) having three connection areas, the compressor (2) being connected to one of the connection areas of the connection piece (17) through the valve (18), the exhaust (8) being connected to another of the connection areas of the connection piece, and the cabinet (14) being connected to yet another of the connection areas of the connection piece (17).

3. Micro gas turbine (1) according to claim 2, wherein the connection piece (17) is Y shaped and comprises two bifurcation legs (17a, 17b) and a main leg (17c), the compressor (2) being connected to one of the bifurcation legs (17a, 17b) of the connection piece (17) through the valve (18), the exhaust (8) being connected to the other of the bifurcation legs (17a, 17b) of the connection piece (17), and the cabinet (14) being connected to the main leg (17c) of the connection piece (17).

4. Micro gas turbine (1) according to any of claims 1-3, wherein the purging mechanism (15) comprises a ventilating mechanism (16) designed to generate a flow of air in the cabinet (14).

5. Micro gas turbine (1) according to any of claims 1-4, wherein the controller (11) is configured to repeatedly perform a process comprising steps of controlling the valve mechanism (13) to allow air from the cabinet (14) and/or exhaust gas from the exhaust (8) to flow to the compressor (2), besides ambient air, checking an actual value related to output electric power of the micro gas turbine (1), and, when it is found that the actual value related to the output electric power is lower than a predetermined operative value, driving the micro gas turbine (1) for increasing a rotational speed of the turbine (4) and the generator (5) until the predetermined operative value related to output electric power is achieved, to increase a supply of the air from the cabinet (14) and/or the exhaust gas from the exhaust (8) to the inlet path of the compressor (2) each time the process is repeated, and to perform the process as long as the rotational speed of the turbine (4) and the generator (5) is below a predetermined maximum value.

6. Micro gas turbine (1) according to claim 5, wherein the controller (11) is further configured to repeatedly perform a subsequent process once the rotational speed of the turbine (4) and the generator (5) has reached the predetermined maximum value, particularly a process comprising steps of checking an actual value related to output electric power of the micro gas turbine (1), and, when it is found that the actual value related to the output electric power is lower than the predetermined operative value, controlling the valve mechanism (13) to decrease the supply of the air from the cabinet (14) and/or the exhaust gas from the exhaust (8) to the inlet path of the compressor (2) until the predetermined operative value related to output electric power is achieved.

7. Micro gas turbine (1) according to claim 5 or 6, wherein the controller (11) is configured to perform the repeated step of checking an actual value related to output electric power at a predetermined time interval.

8. Micro gas turbine (1) according to any of claims 5-7, wherein the value related to the output electric power of the micro gas turbine (1) is one of a value of output electric current of the micro gas turbine (1) and a value of electric efficiency of the micro gas turbine (1).

9. Micro gas turbine (1) according to any of claims 1-8, comprising a grid converter (10) designed to output electric power generated by the micro gas turbine (1) during operation thereof to an electric power grid.

10. Micro gas turbine (1) according to any of claims 1-9, comprising a heat exchanger (6) being configured and arranged to serve as a recuperator for pre-heating pressurized gas obtained from the compressor (2) before being supplied to the combustor (3) by allowing the pressurized gas to exchange heat with exhaust gas from the exhaust (8).

11. Micro gas turbine (1) according to any of claims 1-10, comprising a heat exchanger (7) being configured and arranged to serve for heating an external medium by allowing the external medium to exchange heat with exhaust gas from the exhaust (8).

## Patentansprüche

1. Mikrogasturbine (1) mit
- einem Verdichter (2), der dazu dient, Gas anzusaugen und unter Druck zu setzen,
- eine Brennkammer (3), die so ausgelegt ist, dass sie vom Verdichter (2) unter Druck stehendes Gas ansaugt und durch die Verbrennung von Brennstoff heißes Gas erzeugt,
- eine Turbine (4), die das von der Brennkammer (3) erzeugte heiße Gas ansaugt und entspannt,
- einen Generator (5), der mechanisch mit der Turbine (4) gekoppelt und zur Erzeugung elektrischer Leistung auf der Grundlage mechanischer Leistung ausgelegt ist,
- eine Steuerung (11) zur Steuerung des Betriebs der Mikrogasturbine (1),
- einen Ventilmechanismus (13), der mit einem Einlassweg zu dem Verdichter (2) verbunden ist, wobei die Mikrogasturbine (1) **dadurch gekennzeichnet ist, dass** sie ferner umfasst:
- ein Gehäuse (14), in dem zumindest der Verdichter (2), die Brennkammer (3) und die Turbine (4) untergebracht sind, und
- einen Spülmechanismus (15), der so gestaltet ist, dass er das Spülen des Gehäuseinneren durch Zuführen von Luft in das Gehäuseinnere realisiert, wobei der Ventilmechanismus (13) durch die Steuerung (11) steuerbar ist, um den Einlassweg des Verdichters (2) zum Gehäuseinneren zu öffnen, damit der Verdichter (2) Luft aus dem Gehäuseinneren ansaugen kann, und wobei der Ventilmechanismus (13) auch durch die Steuerung (11) steuerbar ist, um den Einlassweg des Verdichters (2) zu einem mit der Turbine (4) verbundenen Auslass (8) zu öffnen, um dem Verdichter (2) zu ermöglichen, Abgas von der Turbine (4) anzusaugen.

2. Mikrogasturbine (1) nach Anspruch 1, wobei der Ventilmechanismus (13) ein Ventil (18) und ein Verbindungsstück (17) mit drei Verbindungsbereichen umfasst, wobei der Verdichter (2) über das Ventil (18) mit einem der Verbindungsbereiche des Verbindungsstücks (17) verbunden ist, der Auslass (8) mit einem anderen der Verbindungsbereiche des Verbindungsstücks verbunden ist und das Gehäuse (14) mit einem weiteren der Verbindungsbereiche des Verbindungsstücks (17) verbunden ist.

3. Mikrogasturbine (1) nach Anspruch 2, wobei das Verbindungsstück (17) Y-förmig ist und zwei Verzweigungsschenkel (17a, 17b) und einen Hauptschenkel (17c) aufweist, wobei der Verdichter (2) mit einem der Verzweigungsschenkel (17a, 17b) des Verbindungsstücks (17) über das Ventil (18) verbunden ist, wobei der Auslass (8) mit dem anderen der Verzweigungsschenkel (17a, 17b) des Verbindungsstücks (17) verbunden ist, und das Gehäuse (14) mit dem Hauptschenkel (17c) des Verbindungsstücks (17) verbunden ist.

4. Mikrogasturbine (1) nach einem der Ansprüche 1-3, wobei der Spülmechanismus (15) einen Belüftungsmechanismus (16) umfasst, der zur Erzeugung eines Luftstroms im Gehäuse (14) ausgelegt ist.

5. Mikrogasturbine (1) nach einem der Ansprüche 1-4, wobei die Steuerung (11) so konfiguriert ist, dass sie wiederholt einen Prozess durchführt, der Schritte zum Steuern des Ventilmechanismus (13) umfasst, um zu ermöglichen, dass neben Umgebungsluft auch Luft aus dem Gehäuse (14) und/oder Abgas aus dem Auslass (8) zu dem Verdichter (2) strömt, Überprüfen eines Istwerts in Bezug auf die elektrische Ausgangsleistung der Mikrogasturbine (1), und, wenn festgestellt wird, dass der Istwert in Bezug auf die elektrische Ausgangsleistung niedriger ist als ein vorbestimmter Betriebswert, Antreiben der Mikrogasturbine (1) zum Erhöhen einer Drehzahl der Turbine (4) und des Generators (5), bis der vorbestimmte Betriebswert in Bezug auf die elektrische Ausgangsleistung erreicht ist, um eine Zufuhr der Luft aus dem Gehäuse (14) und/oder des Abgases aus dem Auslass (8) zu dem Einlassweg des Verdichters (2) jedes Mal zu erhöhen, wenn der Prozess wiederholt wird, und um den Prozess durchzuführen, solange die Drehzahl der Turbine (4) und des Generators (5) unter einem vorbestimmten Maximalwert liegt.

6. Mikrogasturbine (1) nach Anspruch 5, wobei die Steuerung (11) ferner so konfiguriert ist, dass sie wiederholt einen nachfolgenden Prozess durchführt, sobald die Drehzahl der Turbine (4) und des Generators (5) den vorbestimmten Maximalwert erreicht hat, insbesondere einen Prozess, der Schritte des Prüfens eines auf die elektrische Ausgangsleistung der Mikrogasturbine (1) bezogenen Istwerts umfasst, und, wenn festgestellt wird, dass der auf die elektrische Ausgangsleistung bezogene Istwert niedriger ist als der vorbestimmte Betriebswert, Steuern des Ventilmechanismus (13), um die Zufuhr der Luft aus dem Gehäuse (14) und/oder des Abgases aus dem Auslass (8) zum Einlassweg des Verdichters (2) zu verringern, bis der auf die elektrische Ausgangsleistung bezogene vorbestimmte Betriebswert erreicht ist.

7. Mikrogasturbine (1) nach Anspruch 5 oder 6, wobei die Steuerung (11) so konfiguriert ist, dass sie den wiederholten Schritt der Überprüfung eines Istwerts in Bezug auf die elektrische Ausgangsleistung in einem vorgegebenen Zeitintervall durchführt.

8. Mikrogasturbine (1) nach einem der Ansprüche 5-7, wobei der auf die elektrische Ausgangsleistung der Mikrogasturbine (1) bezogene Wert entweder ein Wert des elektrischen Ausgangsstroms der Mikrogasturbine (1) oder ein Wert des elektrischen Wirkungsgrads der Mikrogasturbine (1) ist.

9. Mikrogasturbine (1) nach einem der Ansprüche 1-8, mit einem Netzumrichter (10), der so ausgelegt ist, dass er die von der Mikrogasturbine (1) während ihres Betriebs erzeugte elektrische Leistung an ein elektrisches Stromnetz abgibt.

10. Mikrogasturbine (1) nach einem der Ansprüche 1-9, die einen Wärmetauscher (6) umfasst, der so konfiguriert und angeordnet ist, dass er als Rekuperator zum Vorheizen von Druckgas dient, das von dem Verdichter (2) erhalten wird, bevor es der Brennkammer (3) zugeführt wird, indem das Druckgas Wärme mit Abgas aus dem Auslass (8) austauschen kann.

11. Mikrogasturbine (1) nach einem der Ansprüche 1-10, mit einem Wärmetauscher (7), der so konfiguriert und angeordnet ist, dass er zur Erwärmung eines externen Mediums dient, indem er dem externen Medium ermöglicht, Wärme mit Abgas aus dem Auslass (8) auszutauschen.

## Revendications

1. Micro-turbine à gaz (1) comprenant
- un compresseur (2) conçu pour admettre et comprimer du gaz,
- un brûleur (3) conçu pour admettre de gaz sous pression depuis le compresseur (2) et pour générer du gaz chaud par combustion de carburant,
- une turbine (4) conçue pour admettre et détendre du gaz chaud généré par le brûleur (3),
- un générateur (5) couplé mécaniquement à la turbine (4) et conçu pour générer de l'énergie électrique à partir d'énergie mécanique,
- une commande (11) conçue pour commander le fonctionnement de la micro-turbine à gaz (1),
- un mécanisme de soupape (13) qui est associé à un chemin d'admission vers le compresseur (2), la micro-turbine à gaz (1) étant **caractérisée en ce qu'**elle comprend en outre :
- une enceinte (14) logeant au moins le compresseur (2), le brûleur (3) et la turbine (4), et
- un mécanisme de purge (15) conçu pour réaliser la purge de l'intérieur de l'enceinte en alimentant de l'air à l'intérieur de l'enceinte, dans laquelle le mécanisme de soupape (13) peut être commandé par la commande (11) pour ouvrir le chemin d'admission du compresseur (2) vers l'intérieur de l'enceinte pour permettre au compresseur (2) d'admettre de l'air depuis l'intérieur de l'enceinte, et dans laquelle le mécanisme de soupape (13) peut aussi être commandé par la commande (11) pour ouvrir le chemin d'admission du compresseur (2) vers un échappement (8) associé à la turbine (4) pour permettre au compresseur (2) d'admettre du gaz d'échappement depuis la turbine (4)..

2. Micro-turbine à gaz (1) selon la revendication 1, dans laquelle le mécanisme de soupape (13) comprend une soupape (18) et une pièce de connexion (17) comportant trois zones de connexion, le compresseur (2) étant connecté à une des zones de connexion de la pièce de connexion (17) par l'intermédiaire de la soupape (18), l'échappement (8) étant connecté à une autre des zones de connexion de la pièce de connexion, et l'enceinte (14) étant connectée à encore une autre des zones de connexion de la pièce de connexion (17).

3. Micro-turbine à gaz (1) selon la revendication 2, dans laquelle la pièce de connexion (17) est en forme de Y et comprend deux branches de bifurcation (17a, 17b) et une branche principale (17c), le compresseur (2) étant connecté à une des branches de bifurcation (17a, 17b) de la pièce de connexion (17) par l'intermédiaire de la soupape (18), l'échappement (8) étant connecté à l'autre des branches de bifurcation (17a, 17b) de la pièce de connexion (17), et l'enceinte (14) étant connectée à la branche principale (17c) de la pièce de connexion (17).

4. Micro-turbine à gaz (1) selon l'une quelconque des revendications 1-3, dans laquelle le mécanisme de purge (15) comprend un mécanisme de ventilation (16) conçu pour générer un courant d'air dans l'enceinte (14).

5. Micro-turbine à gaz (1) selon l'une quelconque des revendications 1-4, dans laquelle la commande (11) est configurée pour réaliser de manière répétée un processus comprenant des étapes de commande du mécanisme de soupape (13) pour permettre à de l'air depuis l'enceinte (14) et/ou du gaz d'échappement depuis l'échappement (8) de s'écouler vers le compresseur (2), en plus de l'air ambiant, de vérifier une valeur réelle liée au courant électrique de sortie de la micro-turbine à gaz (1), et, quand il est trouvé que la valeur réelle lié au courant électrique de sortie est inférieure à une valeur de fonctionnement prédéterminée, de commander la micro-turbine à gaz (1) pour augmenter une vitesse de rotation de la turbine (4) et du générateur (5) jusqu'à ce que la valeur de fonctionnement prédéterminée liée au courant électrique de sortie soit obtenue, pour augmenter une alimentation d'air depuis l'enceinte (14) et/ou du gaz d'échappement depuis l'échappement (8) vers le chemin d'entrée du compresseur (2) chaque fois que le processus est répété, et pour réaliser le processus aussi longtemps que la vitesse de rotation de la turbine (4) et du générateur (5) est au-dessous d'une valeur maximum prédéterminée.

6. Micro-turbine à gaz (1) selon la revendication 5, dans laquelle la commande (11) est en outre configurée pour réaliser de manière répétée un processus suivant une fois que la vitesse de rotation de la turbine (4) et du générateur (5) a atteint la valeur maximum prédéterminée, particulièrement un processus comprenant des étapes de vérification d'une valeur réelle liée au courant électrique de sortie de la micro-turbine à gaz (1), et, quand il est trouvé que la valeur réelle liée au courant électrique de sortie est inférieure à la valeur de fonctionnement prédéterminée, de commande du mécanisme de soupape (13) pour diminuer l'alimentation de l'air depuis l'enceinte (14) et/ou du gaz d'échappement depuis l'échappement (8) vers le chemin d'entrée du compresseur (2) jusqu'à ce que la valeur fonctionnelle prédéterminée liée au courant électrique de sortie soit obtenue.

7. Micro-turbine à gaz (1) selon la revendication 5 ou 6, dans laquelle la commande (11) est configurée pour réaliser l'étape répétée de vérification d'une valeur réelle liée au courant électrique de sortie à un intervalle de temps prédéterminé.

8. Micro-turbine à gaz (1) selon l'une quelconque des revendications 5-7, dans laquelle la valeur liée au courant électrique de sortie de la micro-turbine à gaz (1) est une d'une valeur du courant électrique de sortie de la micro-turbine à gaz (1) et d'une valeur de rendement électrique de la micro-turbine à gaz (1).

9. Micro-turbine à gaz (1) selon l'une quelconque des revendications 1-8, comprenant un convertisseur de réseau (10) conçu pour sortir du courant électrique généré par la micro-turbine à gaz (1) pendant le fonctionnement de celle-ci vers un réseau électrique.

10. Micro-turbine à gaz (1) selon l'une quelconque des revendications 1-9, comprenant un échangeur de chaleur (6) étant configuré et agencé pour servir de récupérateur pour préchauffer du gaz sous pression obtenu depuis le compresseur (2) avant d'être alimenté vers le brûleur (3) en permettant au gaz sous pression d'échanger de la chaleur avec du gaz d'échappement venant de l'échappement (8).

11. Micro-turbine à gaz (1) selon l'une quelconque des revendications 1-10, comprenant un échangeur de chaleur (7) étant configuré et agencé pour servir à chauffer un milieu extérieur en permettant au milieu extérieur d'échanger de la chaleur avec du gaz d'échappement venant de l'échappement (8).
